# EUROPEAN PATENT SPECIFICATION

(11) **EP 0 320 283 B1**
(45) Date of publication and mention of the grant of the patent: **25.05.1994**
(21) Application number: 88311677.4
(22) Date of filing: 09.12.1988
(51) Int. Cl.: G02F 1/133, G02F 1/137

(54) **Electro-optical device**
Elektro-optische Vorrichtung
Dispositif électro-optique

(30) Priority: 10.12.1987 JP 313076/87; 07.03.1988 JP 53005/88
(43) Date of publication of application: 14.06.1989
(73) Proprietor: SEIKO EPSON CORPORATION, Shinjuku-ku Tokyo-to (JP)
(72) Inventor: Wada, Hiroshi, Suwa-shi Nagano-ken (JP); Iijima, Chiyoaki, Suwa-shi Nagano-ken (JP); Ohara, Hiroshi, Suwa-shi Nagano-ken (JP); Momose, Yoichi, Suwa-shi Nagano-ken (JP)
(74) Representative: Sturt, Clifford Mark

(56) References cited:
- EP-A- 0 246 842
- EP-A- 0 284 372
- EP-A- 0 319 351
- GB-A- 2 065 321

## Description

### Description for the following Contracting States : DE, FR, GB

The present invention relates to an electro-optical device such as an electro-optical device comprising a field effect type liquid crystal cell.

Electro-optical devices utilizing the conventional super twisted nematic (STN) mode do not show flat transmittance characteristics with respect to wavelength and, therefore, tend to exhibit a colour cast, which may be yellowish or greenish. To prevent this colouring, the use of an achromatic, optically anisotropic medium or a compensating liquid crystal cell has been contemplated. For example, light rays separated by double refraction occurring in an STN liquid crystal display may be passed through the optically anisotropic medium to compensate for the colouring caused by the double refraction as described in further detail below.

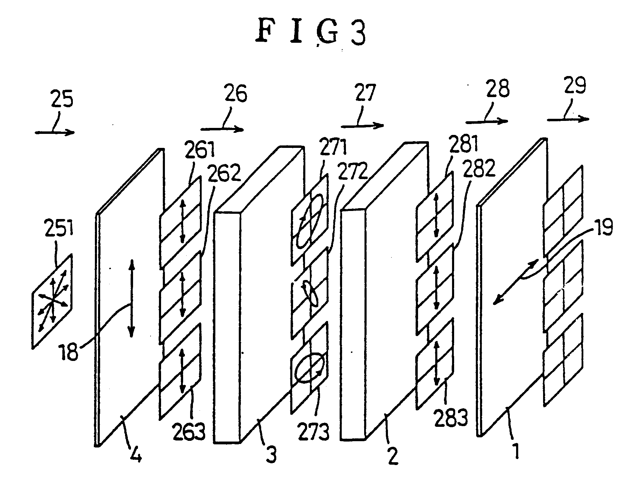

Figure 3 shows an electro-optical device utilising the conventional STN mode. The device comprises an analyser 1, or a polariser, placed on the exit side, a display cell 3 consisting of an electro-optical element utilising the STN mode, and a polariser 4 located on the incident side. A compensating cell 2 is added to the device between the display cell 3 and the analyser 1. The axes of polarisation of the analyser 1 and the polariser 4 lie in the directions indicated by the numerals 19 and 18 respectively. Incident white light 25, which is not polarised and which vibrates in every direction 251 perpendicular to the direction of propagation, strikes the polariser 4. When the incident light passes through the polariser 4, light rays of different wavelengths such as blue, green and red as indicated respectively by the numerals 261, 262 and 263 are linearly polarised in a direction parallel to the direction 18. As the linearly polarised light 26 passes through the display cell 3, the linearly polarised light rays 261, 262 and 263 are transformed into elliptically polarised light rays 271, 272, 273 respectively, because of the bi-refringence of the display cell 3. The condition of each elliptically polarised light ray differs according to its wavelength or colour. Therefore, if the elliptically polarised light 27 directly enters the analyser 1, the amount of the transmitted light 29 would vary, depending on wavelength or colour, and hence the transmitted light 29 would appear coloured. To prevent such colouring, the elliptically polarised light 27 is caused to pass through the compensating cell 2. Then, the elliptically polarised light rays are converted back to linearly polarised light rays 281, 282, 283 of different wavelengths. If the direction of polarisation 19 of the analyser 1 is perpendicular to the directions of polarisation 281, 282, 283 of the linearly polarised light 28, then such light hardly passes through the analyser. That is, black characters or digits are displayed. In the above process, no voltage is applied to the display cell 3. When a voltage is imposed on the display cell 3, white characters or digits are displayed.

In the aforementioned conventional electro-optical device, the compensating cell comprises a liquid crystal cell which is identical in material, layer thickness or cell gap, and twist angle with the display cell to provide a colourless, perfect black and white display. The liquid crystal material of the compensating cell is also twisted in the opposite direction to the liquid crystal material of the display cell. More specifically, the optical path length resulting from the double refraction is the product of the anisotropy Δn of the refractive index of the liquid crystal material and the layer thickness d, i.e. Δnd. Where the compensating cell and the display cell comprise the same liquid crystal material, i.e. they are identical in refractive index anisotropy Δn, they must be identical in layer thickness d in order that the cells be identical in optical path length Δnd.

Since the liquid crystal material of the display cell is required to have good response and temperature characteristics, it is necessary to add expensive additives or other agents and this increases the material cost and makes the manufacturing process complex. Further, it takes a long time to fabricate the liquid crystal material. Thus, the display cell is in itself an expensive item, and since in the conventional electro-optical device, the compensating cell and the display cell are made from the same liquid crystal material, the overall cost is even higher. In addition, the manufacturing step which makes the layer thickness d of the compensating cell equal to the layer thickness d of the display cell is indispensable and expensive.

One type of electro-optical device according to the preamble of claim 1 is disclosed by EP-A-0 246 842. Also, EP-A-0 319 351 falls within the meaning of Article 54(3) EPC.

It is an object of the present invention to provide an electro-optical device which is free of the foregoing problems, which has a compensating cell made from a liquid crystal material that can be selected from a variety of such materials, which needs only a simple manufacturing step for adjusting the cell gaps, and which is capable of providing a substantially uncoloured black and white display. An electro-optical device according to the present invention is as claimed in claim 1.

Generally, the refractive index anisotropy Δn of a liquid crystal material is dependent upon wavelength λ. The anisotropy normally decreases with increasing wavelength λ. We express the refractive index anisotropies at wavelengths 450 nm and 590 nm as Δn(450) and Δn(590) respectively. The ratio of the refractive index anisotropy at a wavelength of 450 nm to the refractive index anisotropy at a wavelength of 590 nm is herein defined as the refractive index dispersion α. That is, 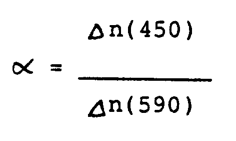
For the same liquid crystal material, the dispersion α is clearly the same, but different liquid crystal materials can also exhibit the same dispersion α.

The present electro-optical device may be used not only as a liquid crystal display but also as an optical shutter or the like.

The molecular packing of the liquid crystal material in both the optically anisotropic medium and the display cell is twisted by well known orientation techniques. No restrictions are imposed on the twist angle. However, the angle in the display cell is preferably set between 90° and 360° because of contrast, display characteristics and manufacturing considerations.

The invention is described further, by way of example, with reference to the accompanying drawings, in which:
Figure 1 is an exploded cross sectional view of an electro-optical device according to the invention;
Figure 2 is a diagram illustrating various axes of the electro-optical device shown in Figure 1;
Figure 3 is a schematic representation of a conventional electro-optical device;
Figures 4 and 8 are graphs in which the transmittance T of respective examples of the electro-optical device according to the invention is plotted against Δn(590)d for some values of dispersion α;
Figures 5, 9, 10, 11 and 12 are graphs in which the minimum transmittances Tₘᵢₙ of respective examples of the electro-optical device according to the invention are plotted against dispersion α;
Figure 6 is a diagram showing the spectra of different examples of the electro-optical device according to the invention;
Figure 7 is a further diagram showing the spectra of examples of the electro-optical device according to the invention;
Figures 13 and 14 are graphs in which values of Δn(590)d of optimum variations of the electro-optical device are plotted against the twist angle of a cell of the device for some values of dispersion α; and
Figure 15 is a cross sectional view of a reflective type electro-optical device according to the invention.

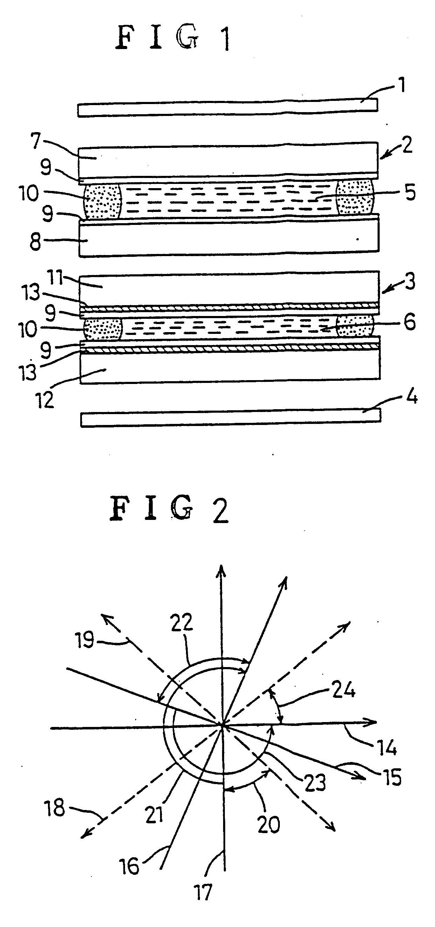

Referring to Figure 1, there is shown an electro-optical device according to the invention. This device comprises an upper polariser 1, a liquid crystal cell 2 (hereinafter referred to as the cell A) acting as an optically anisotropic medium, another liquid crystal cell 3 (hereinafter referred to as the cell B) for providing a display and a lower polariser 4. The cell A comprises a liquid crystal layer 5, an upper plate 7, a lower plate 8, alignment coatings 9 for aligning the molecules of the liquid crystal material, and a spacer 10. The display cell B comprises a liquid crystal layer 6, an upper plate 11, a lower plate 12, transparent electrodes 13, alignment coatings 9, and a spacer 10.

In the cell 2, the alignment coatings 9 are formed on the facing surfaces of the upper plate 7 and the lower plate 8. In the display cell 3, the transparent electrodes 13 are formed on the facing surfaces of the upper plate 11 and the lower plate 12, and the alignment coatings 9 are formed on the electrodes 13. The surfaces of these coatings are rubbed in predetermined directions to properly orient the liquid crystal molecules. The cell gaps of the cells 2 and 3 are made uniform by the spacers 10. The spacer 10 of the cell 2 is bonded to the upper plate 7 and to the lower plate 8 with adhesive. And, the spacer 10 of the display cell 3 is bonded to the upper plate 11 and to the lower plate 12 with adhesive.

It is possible to provide transparent electrodes in the cell A, but they are not present in this specific example.

The liquid crystal layer 5 of the cell A comprises a liquid crystal material such as a biphenyl material or phenlycyclohexane to which an appropriate amount of an optically active substance CB-15 manufactured by BDH Ltd., Britain, is added. The liquid crystal material forms a helical structure having a right twist as viewed in the direction from the cell A towards the cell B. The liquid crystal material may have either a smetic structure or a cholesteric structure. In the present example, however, the liquid crystal material basically has a nematic structure, and the optically active substance is added (such a mixture is referred to as nematic liquid crystal herein). The liquid crystal layer 5 may also be a combination of a plurality of nematic liquid crystals or a nematic liquid crystal to which another substance or cholesteric liquid crystal material is added.

The liquid crystal layer 6 of the display cell B comprises phenylcyclohexane to which an appropriate amount of an optically active substance S-811 manufactured by Merck Patent GmbH, West Germany, is added. The liquid crystal material has a helical structure with a left twist. The polarisers 1 and 4 each comprise a polariser LLC₂-81-18 manufactured by Sanritsu Denki K.K., Japan. The axes of polarisation, or the axes of absorption of the polarisers 1 and 4 are inclined at an angle of 45° to the alignment directions of their respective neighbouring plates 7 and 12. In the present example, the electro-optical device is placed in a negative state and, therefore, the axes of polarisation of the polarisers 1 and 4 are located to the right or to the left of the directions in which the coatings 9 of the plates are rubbed such that the device is kept in negative state. The coating 9 of the lower plate 8 of the cell A is rubbed in a direction perpendicular to the direction in which the coating 9 of the upper plate 11 of the cell B is rubbed. It is not necessary to set this angle to be 90° precisely, but the direction in which the coating 9 of the lower plate 8 is rubbed preferably forms an angle of 70° to 110° with the direction in which the coating 9 of the upper plate 11 is rubbed.

Figure 2 is a diagram illustrating the relationship between the various axes of the electro-optical device shown in Figure 1. The coating 9 of the lower plate 12 of the cell B is rubbed in a direction 14. The coating 9 of the upper plate 11 of the cell B is rubbed in a direction 15. The coating 9 of the lower plate 8 of the cell A is rubbed in a direction 16. The coating 9 of the upper plate 7 of the cell A is rubbed in a direction 17. The axis of polarisation of the lower polariser 4 lies in a direction 18. The axis of polarisation of the upper polariser 1 lies in a direction 19. The axis of polarisation 19 of the upper polariser 1 forms an angle 20 with the direction 17 in which the coating 9 of the upper plate 7 of the cell A is rubbed. The liquid crystal material of the cell A has a twist angle indicated by the numeral 21. The direction 16 in which the coating 9 of the lower plate 8 of the cell A is rubbed forms an angle 22 with the direction 15 in which the coating 9 of the upper plate 7 of the display cell B is rubbed. The liquid crystal material of the display cell B has a twist angle 23. The direction 14 in which the coating 9 of the lower plate 12 of the display cell B is rubbed forms an angle 24 with the axis of polarisation 18 of the lower polariser 4.

When no voltage is applied to a field effect type liquid crystal cell of the negative type acting as an electro-optical device, the liquid crystal cell transmits no light and appears black. When a voltage is applied to the liquid crystal material, it transmits light and characters or digits are diplayed white on a black background. A field effect type liquid crystal cell of the positive type operates in reverse manner. The invention can be applied to both types, but in the present example the negative type is used.

In the device shown in Figure 1, the optically anisotropic medium is placed above the display cell, but it can also be placed below the display cell. Further, two cells, each forming an optically anisotropic medium, may be placed above and below the display cell. In addition, cells, each forming an optically anisotropic medium, may be stacked on top of each other with similar utility.

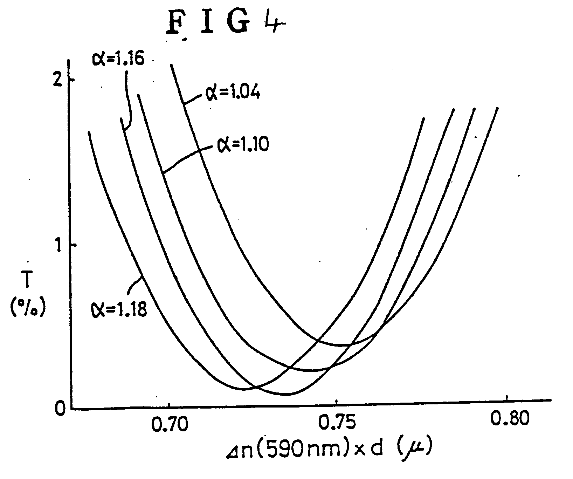

Various examples of the device shown in Figure 1 are discussed below:
(1) The liquid crystal material of the display cell B was twisted to the left and had a twist angle of 240° and properties α = 1.10, where α is the refractive index dispersion and Δn(590)d = 0.9 µ, where Δn(590)d is the optical path length, which is the product of the refractive index anisotropy Δn(590) at wavelength 590 nm and the layer thickness d. The liquid crystal material of the cell A was twisted to the right and had a twist angle of 160°. In Figure 4, the transmittance T of the cell A is plotted against the optical path length Δn(590)d for some values of the dispersion α. The transmittance T takes its minimum value under the conditions:

| | α | Δ*n*(590)*d*, µm | Tₘᵢₙ, % |
|---|---|---|---|
| (i) | 1.04 | 0.75 | 0.39 |
| (ii) | 1.10 | 0.74 | 0.12 |
| (iii) | 1.16 | 0.73 | 0.06 |

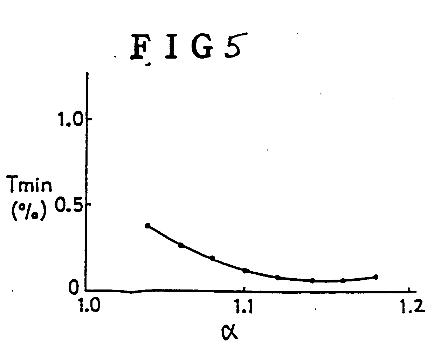

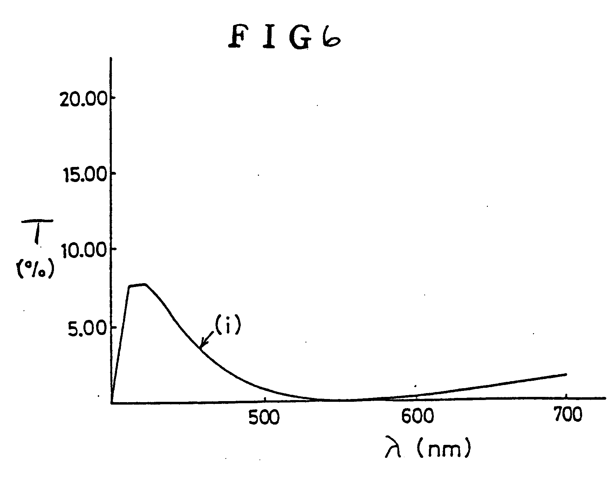

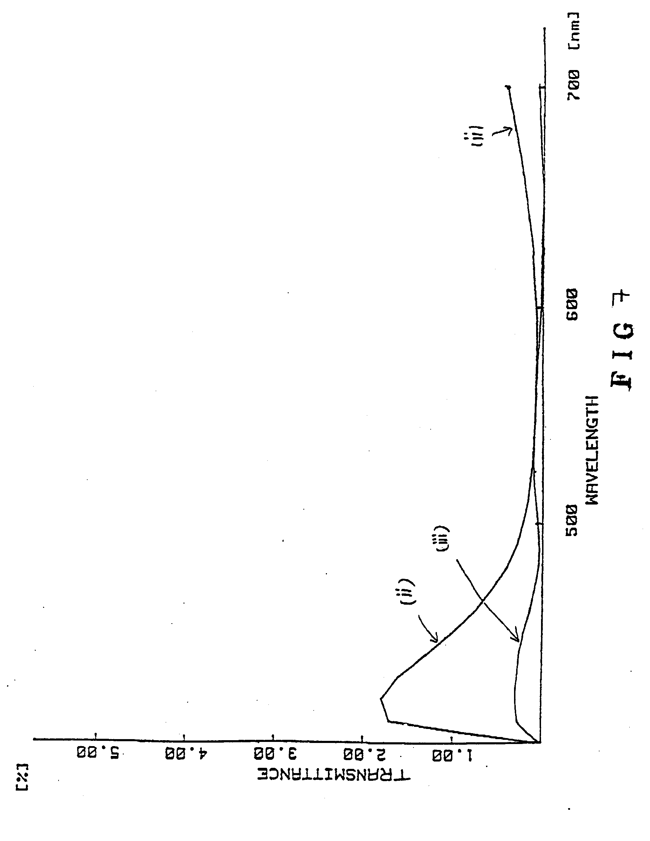

In Figure 5, Tₘᵢₙ is plotted against α. Figures 6 and 7 show the spectra obtained under the conditions (i), (ii) and (iii) above. It can be understood from these graphs that the variation which is given by the condition (iii) and shows the minimum value of Tₘᵢₙ is optimal. The characteristics of the liquid crystal layers of the cells A and B which offer the optimum display are listed in Table 1.

**Table 1**

| | twist | angle | α | Δ*n*(590)*d* | Tₘᵢₙ |
|---|---|---|---|---|---|
| cell A | 160°, | right | 1.16 | 0.73 | 0.06 |
| cell B | 240°, | left | 1.10 | 0.9 | |

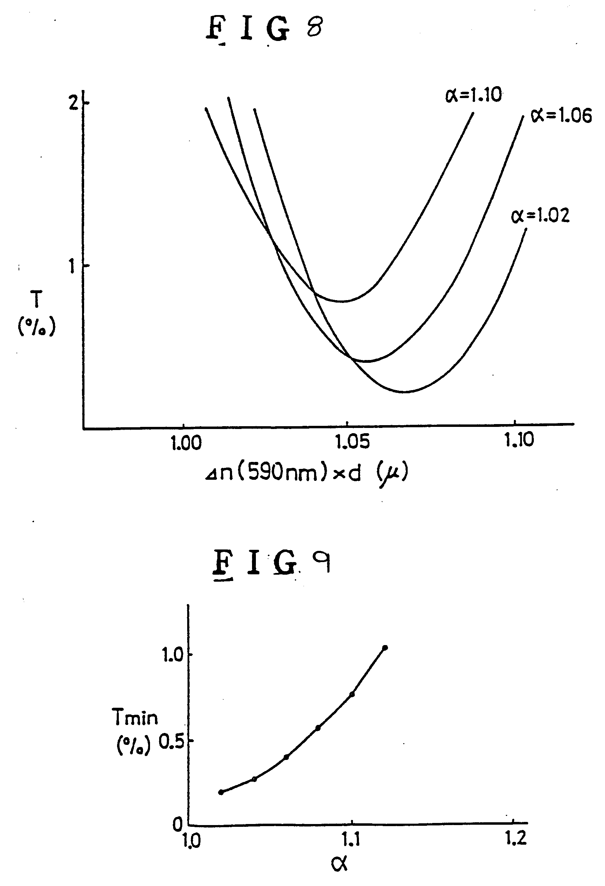

(2) Variations of the electro-optical device were fabricated which were similar to the structure of example (1) above except that they presented higher values of Δn(590)d. In Figure 8, the transmittance of the cell A is plotted against the optical path length Δn(590)d for some values of the dispersion α. The transmittance T assumes its minimum value under the conditions:

| | α | Δ*n*(590)*d*, µm | Tₘᵢₙ, % |
|---|---|---|---|
| (i) | 1.02 | 1.07 | 0.20 |
| (ii) | 1.08 | 1.06 | 0.56 |
| (iii) | 1.12 | 1.05 | 1.02 |

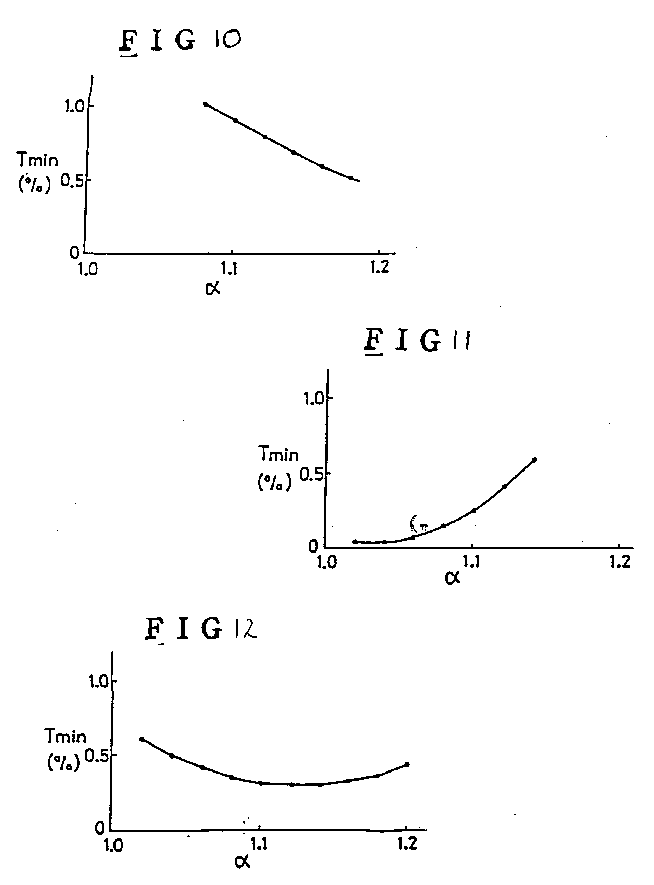

In Figure 9, the minimum transmittance Tₘᵢₙ is plotted against the dispersion α. The optimum display is obtained under the conditions listed in Table 2.

**Table 2**

| | twist | angle | α | Δ*n*(590)*d* | Tₘᵢₙ |
|---|---|---|---|---|---|
| cell A | 160°, | right | 1.02 | 1.07 | 0.20 |
| cell B | 240°, | left | 1.10 | 0.9 | |

(3) Variations of the electro-optical device were produced as in examples (1) to (2), wherein the liquid crystal material of the cell A was twisted to the right and had a twist angle of 300°. The minimum transmittance Tₘᵢₙ were obtained under the conditions

| | α | Δ*n*(590)*d*, µm | Tₘᵢₙ, % |
|---|---|---|---|
| (i) | 1.08 | 0.73 | 1.04 |
| (ii) | 1.12 | 0.72 | 0.78 |
| (iii) | 1.18 | 0.71 | 0.52 |

In Figure 10, the minimum transmittance Tₘᵢₙ is plotted against the dispersion α. The optimum display was derived under the conditions listed in Table 3.

**Table 3**

| | twist | angle | α | Δ*n*(590)*d* | Tₘᵢₙ |
|---|---|---|---|---|---|
| cell A | 300°, | right | 1.18 | 0.71 | 0.52 |
| cell B | 240°, | left | 1.10 | 0.9 | |

(4) Variations of the electro-optical device were fabricated which were similar to the structure of example (3) except that they had higher values of Δn(590)d. Minimum transmittances Tₘᵢₙ were derived under the conditions:

| | α | Δ*n*(590)*d*, µm | Tₘᵢₙ, % |
|---|---|---|---|
| (i) | 1.02 | 1.12 | 0.05 |
| (ii) | 1.04 | 1.11 | 0.04 |
| (iii) | 1.10 | 1.10 | 0.24 |

In Figure 11, the minimum transmittance Tₘᵢₙ is plotted against the dispersion α. The optimum display was obtained under the conditions listed in Table 4.

**Table 4**

| | twist | angle | α | Δ*n*(590)*d* | Tₘᵢₙ |
|---|---|---|---|---|---|
| cell A | same as in example (4) | | 1.04 | 1.11 | 0.04 |
| cell B | 240°, | left | 1.10 | 0.9 | |

(5) The liquid crystal material of the cell B was twisted to the left and had a twist angle of 270° and properties α = 1.20, Δn(590)d = 0.8 µm. The liquid crystal material of the cell A was twisted to the right and had a twist angle of 140°. The relation of the transmittance T of the cell A to the optical path length Δn(590)d was measured for some values of the dispersion α. Minimum transmittances Tₘᵢₙ were derived under the conditions:

| | α | Δ*n*(590)*d*, µm | Tₘᵢₙ, % |
|---|---|---|---|
| (i) | 1.08 | 0.78 | 0.36 |
| (ii) | 1.14 | 0.77 | 0.30 |
| (iii) | 1.18 | 0.76 | 0.38 |

In Figure 12, the minimum transmittance Tₘᵢₙ is plotted against the dispersion α. The optimum display was obtained under the conditions listed in Table 5.

**Table 5**

| | twist | angle | α | Δ*n*(590)*d* | Tₘᵢₙ |
|---|---|---|---|---|---|
| cell A | 140°, | right | 1.14 | 0.77 | 0.30 |
| cell B | 270°, | left | 1.20 | 0.80 | |

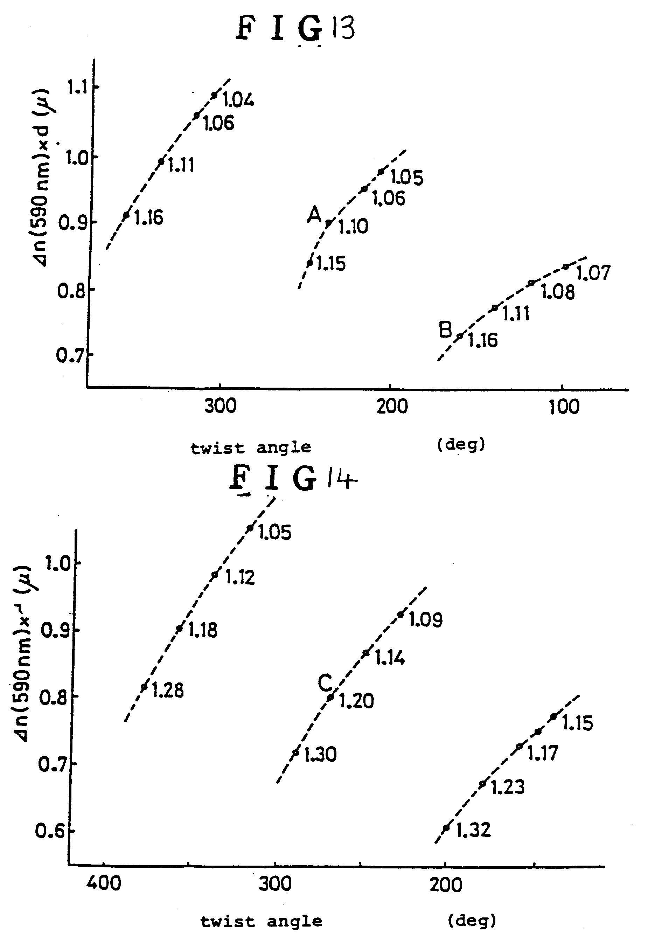

(6) The twist angle of the cell A in each of examples (1) to (4) was varied. In Figure 13, the twist angle of the cell A in each of the optimum cases is plotted against the optical path length Δn(590)d for several values of the dispersion α. Optimum values of the dispersion α are put beside several points. Point B was obtained in example (1).
(7) The twist angle of the cell A of example (5) was changed. In Figure 14, the optical path length Δn(590)d of the cell A in the optimum case is plotted against the twist angle of the cell A for several values of the dispersion α.
Figure 13 and 14 reveal that where the cell A is identical in twist angle dispersion α, and optical path length Δn(590)d with the cell B except for the direction of rotation of the twist, an optimum result is offered (point A in Figure 13, point C in Figure 14, and that even if the cell A differs in twist angle from the cell B, an optimum result may be obtained by appropriately selecting the dispersion α and the optical path length Δn(590)d. It is not correct to say that a black and white display cannot be provided outside the points shown in Figures 17 and 18. Practically acceptable ranges of conditions exist around these points. The ranges are enlarged or narrowed, depending on the degree of strictness imposed on the quality of the black and white, e.g. degree of blackness, on the applications of the electro-optical device, and on the standards established by the user.
(8) The layer thickness d of the cell B was set to about 6.3 µm and the anisotropy Δn(590) of the liquid crystal material was established at 0.13. The twist angle of the liquid crystal material was 260°. With respect to the cell A, the anisotropy Δn(590) of the liquid crystal material was 0.11. The twist angle of the liquid crystal was 200°. The direction in which the liquid crystal material of the cell A was twisted was opposite to the direction in which the liquid crystal material of the cell B was twisted. The layer thickness d of the cell A was approximately 7.4 µm. Generally, the thickness of a liquid crystal cell is not uniform. The non-uniform layer thickness d of the cells A and B would produce colour non-uniformity.
Making the layer thickness d of the cell A larger than the layer thickness d of the cell B reduced the colour non-uniformity.
The appearance of the display was blue in colour, and the colour non-uniformity was low.
(9) The liquid crystal material of the cell B was twisted to the left and the twist angle was 240°. The dispersion α was 1.14, the optical path length Δn(590)d was 0.9 µm. The liquid crystal material of the cell A was twisted to the right, and the twist angle was 150°. The dispersion α was 1.10. When the optical path length Δn(590)d was set to 0.76 µm, the initial transmittance i.e. when the applied voltage was 0 V, was minimal. However, when the optical path length Δn(590)d of the cell A was set to 0.74 µm, the contrast was improved during multiplex driving. Similar results were obtained in this instance whether the reduction in the optical path length to 0.74 µm was obtained by reducing the anisotropy Δn(590) or the layer thickness d, or reducing both.

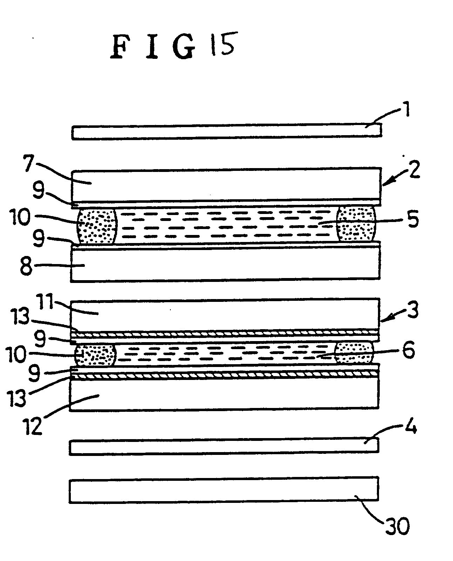

Figure 15 is a cross sectional view of a reflective type electro-optical device according to the invention. Components 1 to 13 of this device are the same as the components 1 to 13 shown in Figure 1. The device further includes a reflecting plate 30. In this example, light enters the upper polariser 1, passes through the lower polariser 4, is reflected by the reflecting plate 30 and exits from the upper polariser 1. If the reflecting plate 30 has a polarisation function, and acts both to polarise and reflect light, the lower polariser 4 may be dispensed with and the structure of the device may be made simpler.

Since the present electro-optical device is constructed as described above, it is free of the problems found in the prior art. When no voltage is applied in the preferred embodiment, the display has a blackish colour. When a voltage is applied, the display has a whitish colour. In this way, the electro-optical device is capable of providing a black and white display with a high contrast.

### Description for the following Contracting State : IT

The present invention relates to an electro-optical device such as an electro-optical device comprising a field effect type liquid crystal cell.

Electro-optical devices utilizing the conventional super twisted nematic (STN) mode do not show flat transmittance characteristics with respect to wavelength and, therefore, tend to exhibit a colour cast, which may be yellowish or greenish. To prevent this colouring, the use of an achromatic, optically anisotropic medium or a compensating liquid crystal cell has been contemplated. For example, light rays separated by double refraction occurring in an STN liquid crystal display may be passed through the optically anisotropic medium to compensate for the colouring caused by the double refraction as described in further detail below.

Figure 3 shows an electro-optical device utilising the conventional STN mode. The device comprises an analyser 1, or a polariser, placed on the exit side, a display cell 3 consisting of an electro-optical element utilising the STN mode, and a polariser 4 located on the incident side. A compensating cell 2 is added to the device between the display cell 3 and the analyser 1. The axes of polarisation of the analyser 1 and the polariser 4 lie in the directions indicated by the numerals 19 and 18 respectively. Incident white light 25, which is not polarised and which vibrates in every direction 251 perpendicular to the direction of propagation, strikes the polariser 4. When the incident light passes through the polariser 4, light rays of different wavelengths such as blue, green and red as indicated respectively by the numerals 261, 262 and 263 are linearly polarised in a direction parallel to the direction 18. As the linearly polarised light 26 passes through the display cell 3, the linearly polarised light rays 261, 262 and 263 are transformed into elliptically polarised light rays 271, 272, 273 respectively, because of the bi-refringence of the display cell 3. The condition of each elliptically polarised light ray differs according to its wavelength or colour. Therefore, if the elliptically polarised light 27 directly enters the analyser 1, the amount of the transmitted light 29 would vary, depending on wavelength or colour, and hence the transmitted light 29 would appear coloured. To prevent such colouring, the elliptically polarised light 27 is caused to pass through the compensating cell 2. Then, the elliptically polarised light rays are converted back to linearly polarised light rays 281, 282, 283 of different wavelengths. If the direction of polarisation 19 of the analyser 1 is perpendicular to the directions of polarisation 281, 282, 283 of the linearly polarised light 28, then such light hardly passes through the analyser. That is, black characters or digits are displayed. In the above process, no voltage is applied to the display cell 3. When a voltage is imposed on the display cell 3, white characters or digits are displayed.

In the aforementioned conventional electro-optical device, the compensating cell comprises a liquid crystal cell which is identical in material, layer thickness or cell gap, and twist angle with the display cell to provide a colourless, perfect black and white display. The liquid crystal material of the compensating cell is also twisted in the opposite direction to the liquid crystal material of the display cell. More specifically, the optical path length resulting from the double refraction is the product of the anisotropy Δn of the refractive index of the liquid crystal material and the layer thickness d, i.e. Δnd. Where the compensating cell and the display cell comprise the same liquid crystal material, i.e. they are identical in refractive index anisotropy Δn, they must be identical in layer thickness d in order that the cells be identical in optical path length Δnd.

Since the liquid crystal material of the display cell is required to have good response and temperature characteristics, it is necessary to add expensive additives or other agents and this increases the material cost and makes the manufacturing process complex. Further, it takes a long time to fabricate the liquid crystal material. Thus, the display cell is in itself an expensive item, and since in the conventional electro-optical device, the compensating cell and the display cell are made from the same liquid crystal material, the overall cost is even higher. In addition, the manufacturing step which makes the layer thickness d of the compensating cell equal to the layer thickness d of the display cell is indispensable and expensive.

One type of electro-optical device according to the preamble of claim 1 is disclosed by EP-A-0 246 842.

It is an object of the present invention to provide an electro-optical device which is free of the foregoing problems, which has a compensating cell made from a liquid crystal material that can be selected from a variety of such materials, which needs only a simple manufacturing step for adjusting the cell gaps, and which is capable of providing a substantially uncoloured black and white display. An electro-optical device according to the present invention is as claimed in claim 1.

Generally, the refractive index anisotropy Δn of a liquid crystal material is dependent upon wavelength λ. The anisotropy normally decreases with increasing wavelength λ. We express the refractive index anisotropies at wavelengths 450 nm and 590 nm as Δn(450) and Δn(590) respectively. The ratio of the refractive index anisotropy at a wavelength of 450 nm to the refractive index anisotropy at a wavelength of 590 nm is herein defined as the refractive index dispersion α. That is, 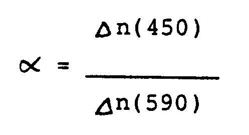
For the same liquid crystal material, the dispersion α is clearly the same, but different liquid crystal materials can also exhibit the same dispersion α.

The present electro-optical device may be used not only as a liquid crystal display but also as an optical shutter or the like.

The molecular packing of the liquid crystal material in both the optically anisotropic medium and the display cell is twisted by well known orientation techniques. No restrictions are imposed on the twist angle. However, the angle in the display cell is preferably set between 90° and 360° because of contrast, display characteristics and manufacturing considerations.

The invention is described further, by way of example, with reference to the accompanying drawings, in which:
Figure 1 is an exploded cross sectional view of an electro-optical device according to the invention;
Figure 2 is a diagram illustrating various axes of the electro-optical device shown in Figure 1;
Figure 3 is a schematic representation of a conventional electro-optical device;
Figures 4 and 8 are graphs in which the transmittance T of respective examples of the electro-optical device according to the invention is plotted against Δn(590)d for some values of dispersion α;
Figures 5, 9, 10, 11 and 12 are graphs in which the minimum transmittances Tₘᵢₙ of respective examples of the electro-optical device according to the invention are plotted against dispersion α;
Figure 6 is a diagram showing the spectra of different examples of the electro-optical device according to the invention;
Figure 7 is a further diagram showing the spectra of examples of the electro-optical device according to the invention;
Figures 13 and 14 are graphs in which values of Δn(590)d of optimum variations of the electro-optical device are plotted against the twist angle of a cell of the device for some values of dispersion α; and
Figure 15 is a cross sectional view of a reflective type electro-optical device according to the invention.

Referring to Figure 1, there is shown an electro-optical device according to the invention. This device comprises an upper polariser 1, a liquid crystal cell 2 (hereinafter referred to as the cell A) acting as an optically anisotropic medium, another liquid crystal cell 3 (hereinafter referred to as the cell B) for providing a display and a lower polariser 4. The cell A comprises a liquid crystal layer 5, an upper plate 7, a lower plate 8, alignment coatings 9 for aligning the molecules of the liquid crystal material, and a spacer 10. The display cell B comprises a liquid crystal layer 6, an upper plate 11, a lower plate 12, transparent electrodes 13, alignment coatings 9, and a spacer 10.

In the cell 2, the alignment coatings 9 are formed on the facing surfaces of the upper plate 7 and the lower plate 8. In the display cell 3, the transparent electrodes 13 are formed on the facing surfaces of the upper plate 11 and the lower plate 12, and the alignment coatings 9 are formed on the electrodes 13. The surfaces of these coatings are rubbed in predetermined directions to properly orient the liquid crystal molecules. The cell gaps of the cells 2 and 3 are made uniform by the spacers 10. The spacer 10 of the cell 2 is bonded to the upper plate 7 and to the lower plate 8 with adhesive. And, the spacer 10 of the display cell 3 is bonded to the upper plate 11 and to the lower plate 12 with adhesive.

It is possible to provide transparent electrodes in the cell A, but they are not present in this specific example.

The liquid crystal layer 5 of the cell A comprises a liquid crystal material such as a biphenyl material or phenlycyclohexane to which an appropriate amount of an optically active substance CB-15 manufactured by BDH Ltd., Britain, is added. The liquid crystal material forms a helical structure having a right twist as viewed in the direction from the cell A towards the cell B. The liquid crystal material may have either a smetic structure or a cholesteric structure. In the present example, however, the liquid crystal material basically has a nematic structure, and the optically active substance is added (such a mixture is referred to as nematic liquid crystal herein). The liquid crystal layer 5 may also be a combination of a plurality of nematic liquid crystals or a nematic liquid crystal to which another substance or cholesteric liquid crystal material is added.

The liquid crystal layer 6 of the display cell B comprises phenylcyclohexane to which an appropriate amount of an optically active substance S-811 manufactured by Merck Patent GmbH, West Germany, is added. The liquid crystal material has a helical structure with a left twist. The polarisers 1 and 4 each comprise a polariser LLC₂-81-18 manufactured by Sanritsu Denki K.K., Japan. The axes of polarisation, or the axes of absorption of the polarisers 1 and 4 are inclined at an angle of 45° to the alignment directions of their respective neighbouring plates 7 and 12. In the present example, the electro-optical device is placed in a negative state and, therefore, the axes of polarisation of the polarisers 1 and 4 are located to the right or to the left of the directions in which the coatings 9 of the plates are rubbed such that the device is kept in negative state. The coating 9 of the lower plate 8 of the cell A is rubbed in a direction perpendicular to the direction in which the coating 9 of the upper plate 11 of the cell B is rubbed. It is not necessary to set this angle to be 90° precisely, but the direction in which the coating 9 of the lower plate 8 is rubbed preferably forms an angle of 70° to 110° with the direction in which the coating 9 of the upper plate 11 is rubbed.

Figure 2 is a diagram illustrating the relationship between the various axes of the electro-optical device shown in Figure 1. The coating 9 of the lower plate 12 of the cell B is rubbed in a direction 14. The coating 9 of the upper plate 11 of the cell B is rubbed in a direction 15. The coating 9 of the lower plate 8 of the cell A is rubbed in a direction 16. The coating 9 of the upper plate 7 of the cell A is rubbed in a direction 17. The axis of polarisation of the lower polariser 4 lies in a direction 18. The axis of polarisation of the upper polariser 1 lies in a direction 19. The axis of polarisation 19 of the upper polariser 1 forms an angle 20 with the direction 17 in which the coating 9 of the upper plate 7 of the cell A is rubbed. The liquid crystal material of the cell A has a twist angle indicated by the numeral 21. The direction 16 in which the coating 9 of the lower plate 8 of the cell A is rubbed forms an angle 22 with the direction 15 in which the coating 9 of the upper plate 7 of the display cell B is rubbed. The liquid crystal material of the display cell B has a twist angle 23. The direction 14 in which the coating 9 of the lower plate 12 of the display cell B is rubbed forms an angle 24 with the axis of polarisation 18 of the lower polariser 4.

When no voltage is applied to a field effect type liquid crystal cell of the negative type acting as an electro-optical device, the liquid crystal cell transmits no light and appears black. When a voltage is applied to the liquid crystal material, it transmits light and characters or digits are diplayed white on a black background. A field effect type liquid crystal cell of the positive type operates in reverse manner. The invention can be applied to both types, but in the present example the negative type is used.

In the device shown in Figure 1, the optically anisotropic medium is placed above the display cell, but it can also be placed below the display cell. Further, two cells, each forming an optically anisotropic medium, may be placed above and below the display cell. In addition, cells, each forming an optically anisotropic medium, may be stacked on top of each other with similar utility.

Various examples of the device shown in Figure 1 are discussed below:
(1) The liquid crystal material of the display cell B was twisted to the left and had a twist angle of 240° and properties α = 1.10, where α is the refractive index dispersion and Δn(590)d = 0.9 µ, where Δn(590)d is the optical path length, which is the product of the refractive index anisotropy Δn(590) at wavelength 590 nm and the layer thickness d. The liquid crystal material of the cell A was twisted to the right and had a twist angle of 160°. In Figure 4, the transmittance T of the cell A is plotted against the optical path length Δn(590)d for some values of the dispersion α. The transmittance T takes its minimum value under the conditions:

| | α | Δ*n*(590)*d*, µm | Tₘᵢₙ, % |
|---|---|---|---|
| (i) | 1.04 | 0.75 | 0.39 |
| (ii) | 1.10 | 0.74 | 0.12 |
| (iii) | 1.16 | 0.73 | 0.06 |

In Figure 5, Tₘᵢₙ is plotted against α. Figures 6 and 7 show the spectra obtained under the conditions (i), (ii) and (iii) above. It can be understood from these graphs that the variation which is given by the condition (iii) and shows the minimum value of Tₘᵢₙ is optimal. The characteristics of the liquid crystal layers of the cells A and B which offer the optimum display are listed in Table 1.

**Table 1**

| | twist | angle | α | Δ*n*(590)*d* | Tₘᵢₙ |
|---|---|---|---|---|---|
| cell A | 160°, | right | 1.16 | 0.73 | 0.06 |
| cell B | 240°, | left | 1.10 | 0.9 | |

(2) Variations of the electro-optical device were fabricated which were similar to the structure of example (1) above except that they presented higher values of Δn(590)d. In Figure 8, the transmittance of the cell A is plotted against the optical path length Δn(590)d for some values of the dispersion α. The transmittance T assumes its minimum value under the conditions:

| | α | Δ*n*(590)*d*, µm | Tₘᵢₙ, % |
|---|---|---|---|
| (i) | 1.02 | 1.07 | 0.20 |
| (ii) | 1.08 | 1.06 | 0.56 |
| (iii) | 1.12 | 1.05 | 1.02 |

In Figure 9, the minimum transmittance Tₘᵢₙ is plotted against the dispersion α. The optimum display is obtained under the conditions listed in Table 2.

**Table 2**

| | twist | angle | α | Δ*n*(590)*d* | Tₘᵢₙ |
|---|---|---|---|---|---|
| cell A | 160°, | right | 1.02 | 1.07 | 0.20 |
| cell B | 240°, | left | 1.10 | 0.9 | |

(3) Variations of the electro-optical device were produced as in examples (1) to (2), wherein the liquid crystal material of the cell A was twisted to the right and had a twist angle of 300°. The minimum transmittance Tₘᵢₙ were obtained under the conditions

| | α | Δ*n*(590)*d*, µm | Tₘᵢₙ, % |
|---|---|---|---|
| (i) | 1.08 | 0.73 | 1.04 |
| (ii) | 1.12 | 0.72 | 0.78 |
| (iii) | 1.18 | 0.71 | 0.52 |

In Figure 10, the minimum transmittance Tₘᵢₙ is plotted against the dispersion α. The optimum display was derived under the conditions listed in Table 3.

**Table 3**

| | twist | angle | α | Δ*n*(590)*d* | Tₘᵢₙ |
|---|---|---|---|---|---|
| cell A | 300°, | right | 1.18 | 0.71 | 0.52 |
| cell B | 240°, | left | 1.10 | 0.9 | |

(4) Variations of the electro-optical device were fabricated which were similar to the structure of example (3) except that they had higher values of Δn(590)d. Minimum transmittances Tₘᵢₙ were derived under the conditions:

| | α | Δ*n*(590)*d*, µm | Tₘᵢₙ, % |
|---|---|---|---|
| (i) | 1.02 | 1.12 | 0.05 |
| (ii) | 1.04 | 1.11 | 0.04 |
| (iii) | 1.10 | 1.10 | 0.24 |

In Figure 11, the minimum transmittance Tₘᵢₙ is plotted against the dispersion α. The optimum display was obtained under the conditions listed in Table 4.

**Table 4**

| | twist | angle | α | Δ*n*(590)*d* | Tₘᵢₙ |
|---|---|---|---|---|---|
| cell A | same as in example (4) | | 1.04 | 1.11 | 0.04 |
| cell B | 240°, | left | 1.10 | 0.9 | |

(5) The liquid crystal material of the cell B was twisted to the left and had a twist angle of 270° and properties α = 1.20, Δn(590)d = 0.8 µm. The liquid crystal material of the cell A was twisted to the right and had a twist angle of 140°. The relation of the transmittance T of the cell A to the optical path length Δn(590)d was measured for some values of the dispersion α. Minimum transmittances Tₘᵢₙ were derived under the conditions:

| | α | Δ*n*(590)*d*, µm | Tₘᵢₙ, % |
|---|---|---|---|
| (i) | 1.08 | 0.78 | 0.36 |
| (ii) | 1.14 | 0.77 | 0.30 |
| (iii) | 1.18 | 0.76 | 0.38 |

In Figure 12, the minimum transmittance Tₘᵢₙ is plotted against the dispersion α. The optimum display was obtained under the conditions listed in Table 5.

**Table 5**

| | twist | angle | α | Δ*n*(590)*d* | Tₘᵢₙ |
|---|---|---|---|---|---|
| cell A | 140°, | right | 1.14 | 0.77 | 0.30 |
| cell B | 270°, | left | 1.20 | 0.80 | |

(6) The twist angle of the cell A in each of examples (1) to (4) was varied. In Figure 13, the twist angle of the cell A in each of the optimum cases is plotted against the optical path length Δn(590)d for several values of the dispersion α. Optimum values of the dispersion α are put beside several points. Point B was obtained in example (1).
(7) The twist angle of the cell A of example (5) was changed. In Figure 14, the optical path length Δn(590)d of the cell A in the optimum case is plotted against the twist angle of the cell A for several values of the dispersion α.
Figure 13 and 14 reveal that where the cell A is identical in twist angle dispersion α, and optical path length Δn(590)d with the cell B except for the direction of rotation of the twist, an optimum result is offered (point A in Figure 13, point C in Figure 14, and that even if the cell A differs in twist angle from the cell B, an optimum result may be obtained by appropriately selecting the dispersion α and the optical path length Δn(590)d. It is not correct to say that a black and white display cannot be provided outside the points shown in Figures 17 and 18. Practically acceptable ranges of conditions exist around these points. The ranges are enlarged or narrowed, depending on the degree of strictness imposed on the quality of the black and white, e.g. degree of blackness, on the applications of the electro-optical device, and on the standards established by the user.
(8) The layer thickness d of the cell B was set to about 6.3 µm and the anisotropy Δn(590) of the liquid crystal material was established at 0.13. The twist angle of the liquid crystal material was 260°. With respect to the cell A, the anisotropy Δn(590) of the liquid crystal material was 0.11. The twist angle of the liquid crystal was 200°. The direction in which the liquid crystal material of the cell A was twisted was opposite to the direction in which the liquid crystal material of the cell B was twisted. The layer thickness d of the cell A was approximately 7.4 µm. Generally, the thickness of a liquid crystal cell is not uniform. The non-uniform layer thickness d of the cells A and B would produce colour non-uniformity.
Making the layer thickness d of the cell A larger than the layer thickness d of the cell B reduced the colour non-uniformity.
The appearance of the display was blue in colour, and the colour non-uniformity was low.
(9) The liquid crystal material of the cell B was twisted to the left and the twist angle was 240°. The dispersion α was 1.14, the optical path length Δn(590)d was 0.9 µm. The liquid crystal material of the cell A was twisted to the right, and the twist angle was 150°. The dispersion α was 1.10. When the optical path length Δn(590)d was set to 0.76 µm, the initial transmittance i.e. when the applied voltage was 0 V, was minimal. However, when the optical path length Δn(590)d of the cell A was set to 0.74 µm, the contrast was improved during multiplex driving. Similar results were obtained in this instance whether the reduction in the optical path length to 0.74 µm was obtained by reducing the anisotropy Δn(590) or the layer thickness d, or reducing both.
Figure 15 is a cross sectional view of a reflective type electro-optical device according to the invention. Components 1 to 13 of this device are the same as the components 1 to 13 shown in Figure 1. The device further includes a reflecting plate 30. In this example, light enters the upper polariser 1, passes through the lower polariser 4, is reflected by the reflecting plate 30 and exits from the upper polariser 1. If the reflecting plate 30 has a polarisation function, and acts both to polarise and reflect light, the lower polariser 4 may be dispensed with and the structure of the device may be made simpler.

Since the present electro-optical device is constructed as described above, it is free of the problems found in the prior art. When no voltage is applied in the preferred embodiment, the display has a blackish colour. When a voltage is applied, the display has a whitish colour. In this way, the electro-optical device is capable of providing a black and white display with a high contrast.

## Claims (Claims for the following Contracting State(s): DE, FR, GB)

1. An electro-optical device comprising a twisted nematic liquid crystal cell (3), utilizing the birefringent characteristics of liquid crystal, the cell (3) having a liquid crystal layer (6) and means (13) for applying a voltage to at least part of the layer (6), and a layer of an optically anisotropic medium (2) compensating for colouring in the twisted nematic liquid crystal cell (3), characterised in that the twist angle of the liquid crystal layer (6) differs from the twist angle of the optically anistropic medium (2), the ratio (α) of the refractive index anisotropy at a wavelength of 450nm (Δn (450)) to the refractive index anisotropy at a wavelength of 590nm (Δn (590)) of the liquid crystal layer (6) differs from that of the optically anisotropic medium (2), and the optically anisotropic medium (2) has a layer thickness exceeding the layer thickness of the liquid crystal layer (6).

2. A device according to claim 1, wherein the liquid crystal layer (6) of the cell (3) has a twist angle that lies in the range from 90° to 360°^{.}

3. A device according to claim 1 or 2, wherein the optically anisotropic medium (2) has a twist angle that lies in the range from 0° to 400°.

4. A device according to any preceding claim, wherein the product of the refractive index anisotrophy (Δn) and the layer thickness (d) of the liquid crystal layer (6) of the cell (3) exceeds the product of the refractive index anisotropy (Δn) and the layer thickness (d) of the optically anisotropic medium (2).

5. A device according to any preceding claim, wherein the optically anisotropic medium consists of a second twisted nematic liquid crystal cell (2).

## Claims (Claims for the following Contracting State(s): IT)

1. An electro-optical device comprising a twisted nematic liquid crystal cell (3), utilizing the birefringent characteristics of liquid crystal, the cell (3) having a liquid crystal layer (6) and means (13) for applying a voltage to at least part of the layer (6), and a layer of an optically anisotropic medium (2) compensating for colouring in the twisted nematic liquid crystal cell (3), characterised in that the ratio (α) of the refractive index anisotropy at a wavelength of 450nm (Δn (450)) to the refractive index anisotropy at a wavelength of 590nm (Δn (590)) of the liquid crystal layer (6) differs from that of the optically anisotropic medium (2), and the optically anisotropic medium (2) has a layer thickness exceeding the layer thickness of the liquid crystal layer (6).

2. A device according to claim 1, wherein the twist angle of the liquid crystal layer (6) differs from the twist angle of the optically anisotropic medium (2).

3. A device according to claim 1 or 2, wherein the liquid crystal layer (6) of the cell (3) has a twist angle that lies in the range from 0° to 360°.

4. A device according to claim 1, 2 or 3, wherein the optically anisotropic medium (2) has a twist angle that lies in the range from 0° to 400°.

5. A device according to any preceding claim, wherein the product of the refractive index anisotrophy (Δn) and the layer thickness (d) of the liquid crystal layer (6) of the cell (3) exceeds the product of the refractive index anistrophy (Δn) and the layer thickness (d) of the optically anisotropic medium (2).

6. A device according to any preceding claim, wherein the optically anisotropic medium consists of a second twisted nematic liquid crystal cell (2).

## Patentansprüche (Patentansprüche für folgende(n) Vertragsstaat(en): DE, FR, GB)

1. Elektrooptische Vorrichtung, welche aufweist: eine verdrehte nematische Flüssigkristallzelle (3), welche die doppelbrechenden Charakteristiken eines Flüssigkristalls verwendet, wobei die Zelle (3) eine Flüssigkristallschicht (6) und eine Einrichtung (13) zum Anlegen einer Spannung an zumindest einen Teil der Schicht (6) hat, und eine Schicht eines optisch anisotropen Mediums (2), welche eine Verfärbung in der verdrehten nematischen Flüssigkrtstallzelle (3) kompensiert, dadurch gekennzeichnet, daß der Verdrehungswinkel der Flüssigkristallschicht (6) von dem Verdrehungswinkel des optisch anistropen Mediums (2) unterschiedlich ist, das Verhältnis (α) der Brechungsindex-Anisotropie bei einer Wellenlänge von 450 nm (Δn(450)) zu der Brechungsindex-Anisotropie bei einer Wellenlänge voll 590 nm (Δn(590)) der Flüssigkristallschicht (6) von dem des optisch anisotropen Mediums (2) unterschiedlich ist, und das optisch anisotrope Medium (2) eine die Schichtdicke der Flüssigkristallschicht (6) übersteigende Schichtdicke hat.

2. Vorrichtung nach Anspruch 1, wobei die Flüssigkristallschicht (6) der Zelle (3) einen Verdrehungswinkel hat, der im Bereich von 90° bis 360° liegt.

3. Vorrichtung nach Anspruch 1 oder 2, wobei das optisch anisotrope Medium (2) einen Verdrehungswinkel hat, der im Bereich von 0° bis 400° liegt.

4. Vorrichtung nach einem der vorhergehenden Ansprüche, bei der das Produkt der Brechungsindex-Anisotropie (Δn) und der Schichtdicke (d) der Flüssigkristallschicht (6) der Zelle (3) das Produkt der Brechungsindex-Anisotropie (Δn) und der Schichtdicke (d) des optisch anisotropen Mediums (2) übersteigt.

5. Vorrichtung nach einem der vorhergehenden Ansprüche, bei der das optisch anisotrope Medium aus einer zweiten verdrehten nematischen Flüssigkristallzelle (2) besteht.

## Patentansprüche (Patentansprüche für folgende(n) Vertragsstaat(en): IT)

1. Elektrooptische Vorrichtung, welche aufweist; eine verdrehte nematische Flüssigkristallzelle (3), welche die doppelbrechenden Charakterietiken eines Flüssigkristalls verwendet, wobei die Zelle (3) eine Flüssigkristallschicht (6) und eine Einrichtung (13) zum Anlegen einer Spannung an zumindest einen Teil der Schicht (6) hat, und eine Schicht eines optisch anisotropen Mediums (2), welche eine Verfärbung in der verdrehten nematischen Flüssigkristallzelle (3) kompensiert,
**dadurch gekennzeichnet**,
daß das Verhältnis (α) der Brechungsindex-Anisotropie bei einer Wellenlänge von 450 nm (Δn(450)) zu der Brechungsindex-Anisotropie bei einer Wellenlänge Von 590 nm (Δn(590)) der Flüssigkristallschicht (6) von dem des optisch anisotropen Mediums (2) unterschiedlich ist, und das optisch anisotrope Medium (2) eine die Schichtdicke der Flüssigkristallschicht (6) übersteigende Schichtdicke hat.

2. Vorrichtung nach Anspruch 1,
wobei der Verdrehungswinkel der Flüssigkristallschicht (6) von dem Verdrehungswinkel des optisch anistropen Mediums (2) unterschiedlich ist.

3. Vorrichtung nach Anspruch 1 oder 2,
wobei die Flüssigkristallschicht (6) der Zelle (3) einen Verdrehungswinkel hat, der im Bereich von 90° bis 360° liegt.

4. Vorrichtung nach Anspruch 1, 2 oder 3,
wobei das optisch anisotrope Medium (2) einen Verdrehungswinkel hat, der im Bereich von 0° bis 400° liegt.

5. Vorrichtung nach einem der vorhergehenden Ansprüche, bei der das Produkt der Brechungsindex-Anisotropie (Δn) und der Schichtdicke (d) der Flüssigkristallschicht(6)der Zelle (3) das Produkt der Brechungsindex-Anisotropie (Δn) und der Schichtdicke (d) des optisch anisotropen Mediums (2) übersteigt`

6. Vorrichtung nach einem der Vorhergehenden Ansprüche, bei der das optisch anisotrope Medium aus einer zweiten verdrehten nematischen Flüssigkristallzelle (2) besteht.

## Revendications (Revendications pour l'(les) Etat(s) contractant(s) suivant(s): DE, FR, GB)

1. Dispositif électro-optique comprenant une cellule (3) de cristal liquide nématique torsadé, utilisant les caractéristiques de biréfringence du cristal liquide, la cellule (3) comportant une couche de cristal liquide (6) et un moyen (13) pour appliquer une tension à une partie, au moins, de la couche (6), et une couche d'un milieu optiquement anisotrope (2) compensant la coloration dans la cellule (3) de cristal liquide nématique torsadé, caractérisé en ce que l'angle de torsion de la couche de cristal liquide (6) diffère de l'angle de torsion du milieu optiquement anisotrope (2), en ce que le rapport (a) entre l'indice de réfraction anisotrope à une longueur d'onde de 450 nm (Δn (450)) et l'indice de réfraction anisotrope à une longueur d'onde de 590 nm (Δn (590)) de la couche (6) de cristal liquide diffère de celui de la couche du milieu optiquement anisotrope (2), et en ce que le milieu optiquement anisotrope (2) a une épaisseur de couche supérieure à l'épaisseur de couche de la couche (6) du cristal liquide.

2. Dispositif selon la revendication 1, dans lequel la couche (6) de cristal liquide de la cellule (3) a un angle de torsion compris entre 90° et 360°.

3. Dispositif selon la revendication 1 ou 2, dans lequel le milieu optiquement anisotrope (2) a un angle de torsion compris entre 0° et 400°.

4. Dispositif selon l'une quelconque des revendications précédentes, dans lequel le produit de l'indice de réfraction anisotrope (Δn) et de l'épaisseur (d) de la couche (6) de cristal liquide de la cellule (3) est supérieur au produit de l'indice de réfraction anisotrope (Δn) et de l'épaisseur (d) du milieu optiquement anisotrope (2).

5. Dispositif selon l'une quelconque des revendications précédentes, dans lequel le milieu optiquement anisotrope est constitué par une seconde cellule (2) de cristal liquide nématique torsadé.

## Revendications (Revendications pour l'(les) Etat(s) contractant(s) suivant(s): IT)

1. Dispositif électro-optique comprenant une cellule (3) de cristal liquide nématique torsadé, utilisant les caractéristiques de biréfringence du cristal liquide, la cellule (3) comportant une couche de cristal liquide (6) et un moyen (13) pour appliquer une tension à une partie, au moins, de la couche (6), et une couche d'un milieu optiquement anisotrope (2) compensant la coloration dans la cellule (3) de cristal liquide nématique torsadé, caractérisé en ce que le rapport (α) entre l'indice de réfraction anisotrope à une longueur d'onde de 450 nm (Δn (450)) et l'indice de réfraction anisotrope à une longueur d'onde de 590 nm (Δn (590)) de la couche (6) de cristal liquide, diffère de celui du milieu optique anisotrope (2), et en ce que le milieu optiquement anisotrope (2) a une épaisseur de couche supérieure à l'épaisseur de couche de la couche de cristal liquide (6).

2. Dispositif selon la revendication 1, dans lequel l'angle de torsion de la couche (6) de cristal liquide diffère de l'angle de torsion du milieu optiquement anisotrope (2).

3. Dispositif selon la revendication 1 ou 2, dans lequel la couche (6) de cristal liquide de la cellule (3) a un angle de torsion compris entre 90° et 360°.

4. Dispositif selon l'une quelconque des revendications précédentes, dans lequel le milieu optiquement anisotrope (2) a un angle de torsion compris entre 0° et 400°.

5. Dispositif selon l'une quelconque des revendications précédentes, dans lequel le produit de l'indice de réfraction anisotrope (Δn) et de l'épaisseur (d) de la couche (6) de cristal liquide de la cellule (3) est supérieur au produit de l'indice de réfraction anisotrope (Δn) et de l'épaisseur (d) du milieu optiquement anisotrope (2).

6. Dispositif selon l'une quelconque des revendications précédentes, dans lequel le milieu optiquement anisotrope est constitué par une seconde cellule (2) de cristal liquide nématique torsadé.
